# EUROPÄISCHE PATENTANMELDUNG

(11) **EP 2 399 721 A1**
(43) Veröffentlichungstag der Anmeldung: **28.12.2011**
(21) Anmeldenummer: 11171620.5
(22) Anmeldetag: 28.06.2011
(51) Int. Cl.: B29C 47/90, B29C 47/92

(54) **Kalibrier- und Kühleinrichtung für Extrusionsprofile**

(30) Priorität: 28.06.2010 AT 4092010 U
(71) Anmelder: Theysohn Extrusionstechnik Gesellschaft m.b.H., 2100 Korneuburg (AT)
(72) Erfinder: Reichhardt, Johann, 4523 Neuzeug (AT); Jakob, Albert, 4053 Haid bei Ansfelden (AT); Wegmaier, Rudolf, 4563 Micheldorf (AT)
(74) Vertreter: Müllner, Martin

(57) **Zusammenfassung**

Kalibrier- und Kühleinrichtung für extrudierte Kunststoff-Hohlprofile, die mehrere Kalibriersegmente (5,6,7) mit - dem gewünschten Profil entsprechenden - Durchbrüchen (13) aufweist. Zu den Innenwänden führen mit einer Unterdruckquelle in Verbindung stehende Kanäle. Den Kalibriersegmenten (5,6,7) ist ein Wassertank (1) nachgeordnet, in dem Stützblenden (10,11,12) angeordnet sind, deren Durchbrüche der Außenkontur des Hohlprofils entsprechen. Der Wassertank (1) ist abgeschlossen und weist einen Freiraum (4) auf, der mit einer Unterdruckquelle in Verbindung steht. Um einen einfachen Aufbau einer solchen Einrichtung zu ermöglichen, ist vorgesehen, dass nur dasjenige Kalibriersegment (5), welches vom zu kalibrierenden Hohlprofil zuerst durchsetzt wird, an einen eigenen Kühlkreislauf angeschlossen und mit einem eigenen Anschluss an eine Unterdruckquelle versehen ist und dass die übrigen Kalibriersegmente (6,7) im Wassertank (1) angeordnet sind.

## Beschreibung

### Technishes Gebiet

Die Erfindung betrifft eine Kalibrier- und Kühleinrichtung nach dem Oberbegriff des Anspruchs 1.

### Stand der Technik

Mit derartigen Kalibrier- und Kühleinrichtungen werden oft relativ kompliziert geformte Hohlprofile, wie z.B. Profile zur Herstellung von Fensterrahmen, kalibriert und gekühlt. Dabei ist es erforderlich, dass die Außenkontur des Hohlprofils in engen Toleranzen gehalten wird. Dies wird durch den an der Innenwand der Durchbrüche der Kalibriersegmente herrschenden Unterdruck erreicht, der dafür sorgt, dass das noch weiche, extrudierte Hohlprofil an die Innenwand der Kalibriersegmente gepresst wird und an einem Zusammenfallen gehindert wird.

Bei bekannten derartigen Kalibrier- und Kühleinrichtungen sind oft Trocken- und Nasskalibrierung kombiniert. Bei der Trockenkalibrierung sind mehrere Kalibriersegmente vorgesehen, die alle mit einem Kühlkreislauf verbunden sind und die an eine Unterdruckquelle angeschlossen sind. Nach dem Verlassen des letzten Kalibriersegments der Trockenkalibrierung gelangt der extrudierte Hohlprofilstrang zur Nasskalibrierung in den Wassertank.

Der Aufbau der bekannten derartigen Kalibrier- und Kühleinrichtungen, wie sie beispielsweise in der AT 4441 U1 beschrieben ist, ist aufgrund der in jedem einzelnen Kalibriersegment der Trockenkanäle erforderlichen Kühlkanäle relativ kompliziert. Dazu kommen noch die zahlreichen erforderlichen Verbindungen mit Kühlkreisläufen und einer Unterdruckquelle.

### Kurzbeschreibung der Erfindung

Ziel der Erfindung ist es, diesen Nachteil zu vermeiden und eine Kalibrier- und Kühleinrichtung der eingangs erwähnten Art vorzuschlagen, die sich durch einen einfacheren Aufbau auszeichnet.

Erfindungsgemäß wird dies durch die kennzeichnenden Merkmale des Anspruchs 1 erreicht.

Durch die vorgeschlagenen Maßnahmen ergibt sich der Vorteil, dass lediglich ein Kalibriersegment mit Kühlkanälen ausgestattet zu werden braucht. Dadurch können die übrigen Kalibriersegmente sehr einfach gestaltet werden und es entfallen aufgrund der Kühlung der Kalibriersegmente durch das Wasser des Wassertanks auch die bisher erforderlichen Verbindungen mit einem Kühlkreislauf. Es ist dies dann zwar keine reine Trockenkalibrierung mehr, aber dies stört nicht, wie im Rahmen der vorliegenden Erfindung festgestellt wurde. Es genügt die Trockenkalibrierung im ersten Segment, wo Temperatur und Unterdruck individuell eingestellt werden kann; die weiteren Segmente können alle auf der gleichen Temperatur und dem gleichen Unterdruck gehalten werden, indem sie einfach im Wassertank angeordnet sind.

Durch die Merkmale des Anspruchs 2 ergibt sich der Vorteil, dass der Druck in der Kammer unabhängig vom übrigen Wassertank geregelt werden kann, d.h. die eigentliche Nasskalibrierung kann mit geringerem Unterdruck erfolgen, wie dies auch bisher üblich war.

Um eine einfache Anpassung der Zahl der Kalibriersegmente an die jeweiligen Erfordernisse zu ermöglichen, ist es vorteilhaft, die Merkmale des Anspruchs 3 vorzusehen. Dabei kann je nach Bedarf die Zahl der Kalibriersegmente einfach erhöht oder vermindert werden. Die für das jeweilige Hohlprofilerforderliche Anzahl von Kalibriersegmenten kann einfach zusammengesteckt und miteinander, z.B. mittels Schrauben, verbunden werden.

Eine in konstruktiver Hinsicht sehr einfache Lösung ergibt sich durch die Merkmale des Anspruchs 4.

Um einen kompakten Aufbau der Kalibrier- und Kühleinrichtung sicherzustellen, können die Merkmale des Anspruchs 5 vorgesehen werden.

Weiters können die Merkmale des Anspruchs 6 vorgesehen sein. Durch diese Maßnahmen ergibt sich der Vorteil, dass eine laminare Strömung vermieden wird und daher ein sehr guter Wärmeaustausch zwischen dem zu kühlenden Strang des Hohlprofils und dem Wasser erfolgt.

### Kurze Beschreibung der Zeichnungsfiguren

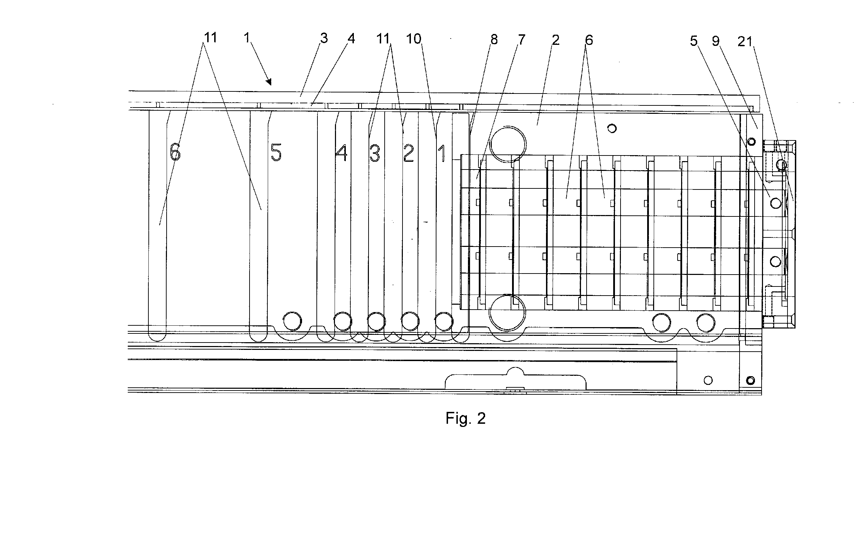

Die Erfindung wird nun anhand der Zeichnungen näher erläutert. Dabei zeigt: Fig. 1 schematisch eine Seitenansicht einer erfindungsgemäßen Kalibrier- und Kühleinrichtung; Fig. 2 schematisch einen Teil der Seitenansicht in vergrößertem Maßstab; Fig. 3 schematisch eine Ansicht des ersten Kalibriersegments; Fig. 4 schematisch Seitenansichten verschiedener Kalibriersegmente; Fig. 5 schematisch Ansichten verschiedener Stützblenden; und Fig. 6 schematisch eine Frontansicht der erfindungsgemäßen Kalibrier- und Kühleinrichtung.

### Beschreibung der Ausführungsarten

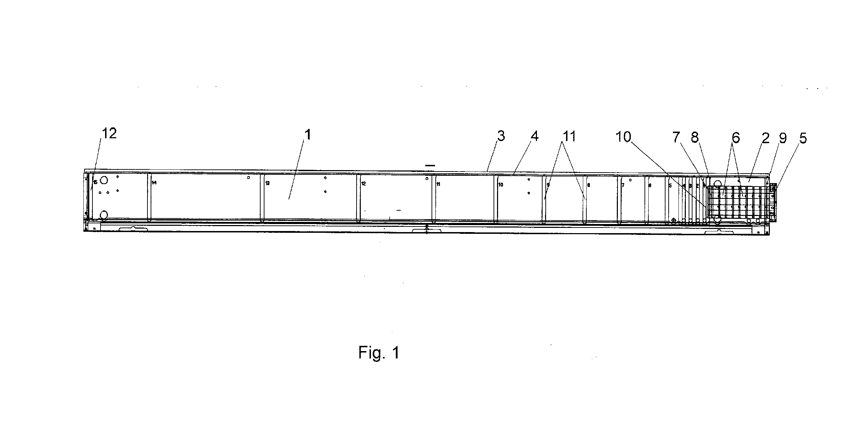

Die Kalibrier- und Kühleinrichtung gemäß Fig. 1 weist einen Wassertank 1 auf, der eine abgeteilte Kammer 2 aufweist. Dabei ist der gesamte Tank 1 mit einem Deckel 3 abgeschlossen, unter dem sich ein Freiraum 4 befindet, der mit einer nicht dargestellten Unterdruckquelle verbunden ist. Dadurch herrscht im Wassertank 1 ein entsprechender Unterdruck.

In der Kammer 2 sind Kalibriersegmente 6, 7 angeordnet, die an ein erstes Kalibriersegment 5 anschließen, das eine Wand 9 des Tanks 1 durchsetzt. Die Kalibriersegmente 6 sind im Wesentlichen baugleich ausgebildet. Das Kalibriersegment 7 entspricht den Kalibriersegmenten 6, durchsetzt jedoch die Wand 8, die die Kammer 2 abtrennt.

Außerhalb der Kammer 2 sind in Bewegungsrichtung eines extrudierten Hohlprofilstranges in immer größer werdenden Abständen Stützblenden 10, 11, 12 angeordnet, wobei die Stützblende 12 den Abschluss des Tanks 1 bildet.

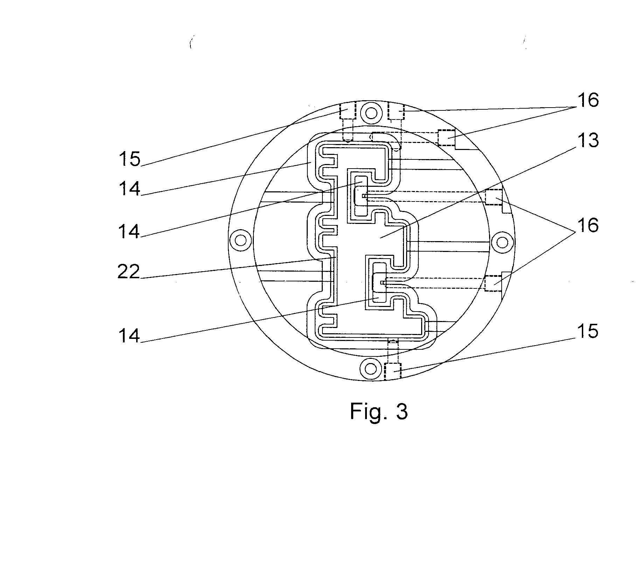

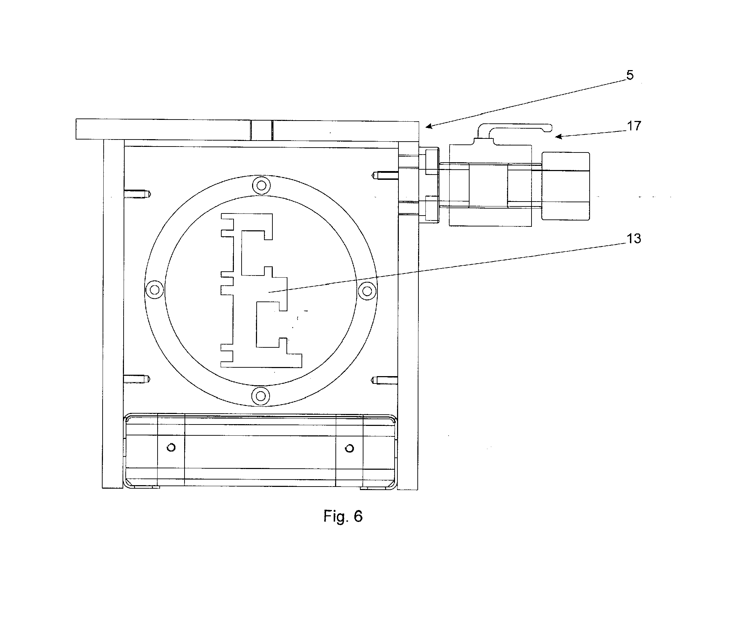

Wie aus Fig. 3 zu ersehen ist, weist das erste Kalibriersegment 5 einen der gewünschten Form des extrudierten Hohlprofils entsprechenden Durchbruch 13 auf, der auch aus Fig. 6 zu ersehen ist. Dieser Durchbruch 13 ist von Kanälen 14 umgeben, die zu Anschlüssen 16 führen und als Kühlkanäle dienen, die mit einem separaten Kühlkreislauf verbindbar sind.

Weitere Anschlüsse 15 verbinden eine Unterdruckquelle mit einer den Durchbruch 13 umgebenden Kammer 22, die über Schlitze (nicht dargestellt) mit dem Inneren des Durchbruchs 13 verbunden ist. Dadurch kann ein noch weicher extrudierter Strang, der in das Kalibriersegment 5 eintritt (und danach die weiteren Kalibriersegmente 6, 7 durchläuft), an der Innenwand des Durchbruchs 13 gehalten werden, wobei im Inneren des Hohlprofils der normale Luftdruck herrscht. Dabei wird das Hohlprofil auch gekühlt und erhärtet. Aufgrund der Anlage an der Innenwand der Durchbrüche 13 der Kalibriersegmente 5, 6, 7 erfolgt die durch die Abkühlung bedingte Schrumpfung des Materials des Hohlprofils an dessen Innenseite, sodass die Maßhaltigkeit der Außenkontur des Hohlprofils erhalten bleibt.

Zum Anschluss an den Kühlkreislauf und die Unterdruckquelle ist eine Anschlussgarnitur 17 vorgesehen.

An der äußeren Stirnseite des Kalibriersegments 5 ist dieses mit einer Abdeckung 21 abgedeckt, damit die als Nuten ausgeführten Kanäle 14, 22 geschlossen sind.

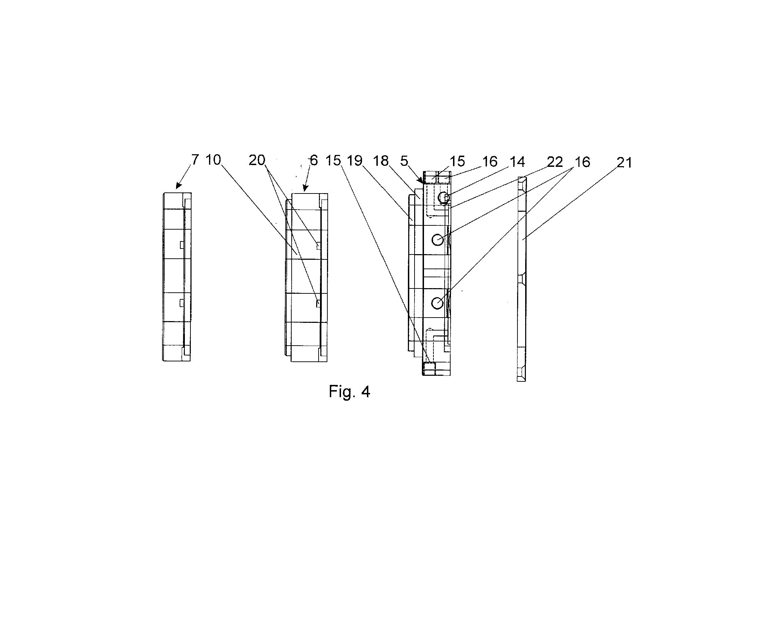

Das Kalibriersegment 5 weist, wie aus Fig. 4 zu ersehen ist, zwei Ansätze 18, 19 auf, von denen der Ansatz 18 in der Wand 9 des Tanks 1 gehalten ist und der Ansatz 19 als Zentrieransatz dient, der in eine Zentrierausnehmung eines anschließenden Kalibriersegments 6 eingreift, das ebenfalls einen der gewünschten Außenkontur des extrudierten Stranges entsprechenden Durchbruch 13 aufweist. Dabei sind an den einen Stirnseiten der Kalibriersegmente 6 Kanäle 20 eingearbeitet, die mit der Innenwand des Durchbruchs in Verbindung stehen, sodass der in der Kammer 2 herrschende Unterdruck auf den Extrusionsstrang wirkt. Die Zentrieransätze 19 der Kalibriersegmente 5, 6 greifen in Zentriervertiefungen des benachbarten Kalibriersegmentes ein, wodurch eine solche Kalibriereinheit sehr einfach durch Variation der Zahl der Kalibriersegmente 6 an die jeweiligen Erfordernisse angepasst werden kann.

Ein Kalibriersegment 7 ist in der Trennwand 8 des Tanks 1 gehalten und weist keinen Zentrieransatz auf. Dieses stellt das Ende einer Kalibriereinheit dar.

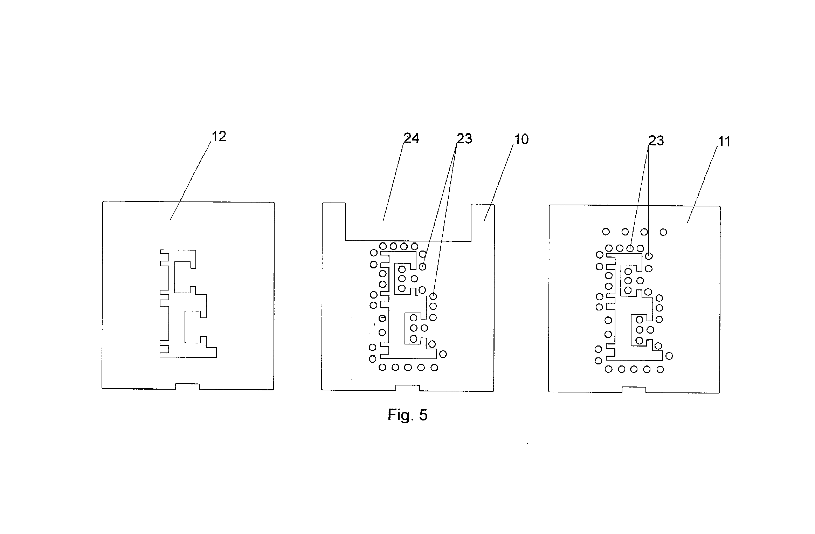

Wie aus Fig. 5 zu ersehen ist, sind die Stützblenden 10, 11, 12 mit einem Durchbruch 13 versehen, dessen Gestalt der gewünschten Kontur des Hohlprofils entspricht. Bei den Stützblenden 10 und 11 sind Bohrungen 23 vorgesehen, die nahe dem Durchbruch 13 angeordnet sind und eine Durchströmung der Stützblende 10, 11 ermöglichen. Dabei ist die Stützblende 10 mit einer Ausnehmung 24 versehen, die ein Überströmen in diesem Bereich ermöglicht.

Die Stützblende 12 schließt den Wassertank 1 ab und ermöglicht den Durchtritt des kalibrierten Hohlprofilstranges.

## Patentansprüche

1. Kalibrier- und Kühleinrichtung für extrudierte Kunststoff-Hohlprofile, die mehrere Kalibriersegmente (5, 6, 7) aufweist, welche mit - dem gewünschten Profil entsprechenden - Durchbrüchen (13) versehen sind, zu deren Innenwänden mit einer Unterdruckquelle in Verbindung stehende Kanäle (15, 22) führen, wobei den Kalibriersegmenten (5, 6, 7) ein Wassertank (1), in dem Stützblenden (10, 11, 12) angeordnet sind, deren Durchbrüche (13) der Außenkontur des Hohlprofils entsprechen, nachgeordnet ist, der abgeschlossen ist und einen Freiraum (4) aufweist, der mit einer Unterdruckquelle in Verbindung steht, **dadurch gekennzeichnet, dass** nur jenes Kalibriersegment (5), welches vom zu kalibrierenden Hohlprofil zuerst durchsetzt wird, an einen eigenen Kühlkreislauf angeschlossen und mit einem eigenen Anschluss an eine Unterdruckquelle versehen ist und dass die weiteren Kalibriersegmente (6, 7) im Wassertank (1) angeordnet sind und durch das umgebende Wasser gekühlt sind.

2. Kalibrier- und Kühleinrichtung nach Anspruch 1, **dadurch gekennzeichnet, dass** die weiteren Kalibriersegmente (6, 7) in einer Kammer (2) des Wassertanks (1) angeordnet sind, deren Unterdruck unabhängig von dem des restlichen Wassertanks einstellbar ist.

3. Kalibrier- und Kühleinrichtung nach Anspruch 1 oder 2, **dadurch gekennzeichnet, dass** die Kalibriersegmente (5, 6) Zentrieransätze (19) bzw. entsprechende -ausnehmungen aufweisen.

4. Kalibrier- und Kühleinrichtung nach einem der Ansprüche 1 bis 3, **dadurch gekennzeichnet, dass** die Kanäle zur Herstellung einer Verbindung mit der Unterdruckquelle bei den weiteren Kalibriersegmenten (6, 7) durch zwischen den einzelnen Kalibriersegmenten (6, 7) angeordnete Schlitze (20) gebildet sind.

5. Kalibrier- und Kühleinrichtung nach einem der Ansprüche 1 bis 4, **dadurch gekennzeichnet, dass** das erste, mit einem eigenen Kühlkreislauf verbundene Kalibriersegment (5) dicht in einer Wand des Wassertanks (1) gehalten ist.

6. Kalibrier- und Kühleinrichtung nach einem der Ansprüche 1 bis 5, **dadurch gekennzeichnet, dass** die Stützblenden (10, 11) mit Bohrungen (23) versehen sind, wobei die Bohrungen einander benachbarter Stützelemente (10, 11) gegeneinander versetzt angeordnet sind.
